# EUROPÄISCHE PATENTSCHRIFT

(11) **EP 2 132 026 B1**
(45) Veröffentlichungstag und Bekanntmachung des Hinweises auf die Patenterteilung: **04.04.2012**
(21) Anmeldenummer: 08707481.1
(22) Anmeldetag: 01.02.2008
(51) Int. Cl.: B29C 70/88, B29C 70/08, B29C 70/20, B29C 70/22, B29C 70/30, B29C 73/10

(54) **VERFAHREN ZUM HERSTELLEN EINER LOCHVERSTÄRKUNG BEI EINEM BAUTEIL AUS EINEM FASER-KUNSTSTOFF-VERBUND UND BAUTEIL AUS EINEM FASER-KUNSTSTOFF-VERBUND**
METHOD FOR PRODUCING A HOLE REINFORCEMENT IN A COMPONENT MADE OF A FIBER PLASTIC COMPOSITE, AND COMPONENT MADE OF A FIBER PLASTIC COMPOSITE
PROCÉDÉ DE FABRICATION DE RENFORT D'ORIFICE POUR UNE PIÈCE EN COMPOSITE PLASTIQUE ET FIBRES, ET PIÈCE EN COMPOSITE PLASTIQUE ET FIBRES

(30) Priorität: 02.04.2007 DE 102007017446
(43) Veröffentlichungstag der Anmeldung: 16.12.2009
(73) Patentinhaber: ACC Technologies GmbH & Co. KG, 71063 Sindelfingen (DE)
(72) Erfinder: FASSBÄNDER, Peter, 71065 Sindelfingen (DE); GEORGII, Andreas, 71069 Sindelfingen (DE)
(74) Vertreter: Fuhlendorf, Jörn
(86) Internationale Anmeldenummer: PCT/EP2008/000795
(87) Internationale Veröffentlichungsnummer: WO 2008/119409

(56) Entgegenhaltungen:
- EP-A- 0 567 845
- US-A- 5 518 564

## Beschreibung

Die vorliegende Erfindung bezieht sich auf ein Verfahren zum Herstellen einer Lochverstärkung bei einem Bauteil aus einem Faser-Kunststoff-Verbund und auf ein Bauteil aus einem Faser-Kunststoff-Verbund nach dem Oberbegriff des Anspruchs 1 bzw. dem des Anspruchs 11.

Aus der einschlägig technischen Literatur und den weiter unten genannten Patentveröffentlichungen ist es bekannt, dass Verstärkungsfasern aus beispielsweise Glas, Karbon oder Aramid eine wesentlich höhere relative Zugfestigung als Aluminium oder Stahl aufweisen. Dies gilt jedoch innerhalb einer Kunststoff-Matrix nur insoweit, als die in der Matrix eingeharzten Verstärkungsfasern in Richtung der Zug- bzw. Druckbelastung verlegt sind. Bei Abweichung zwischen der Richtung der Verstärkungsfasern und der Richtung der Zug- bzw. Druckbelastung nimmt die relative Zug- bzw. Druckfestigkeit solcher Verstärkungsfasern rapide ab. Es ist deshalb wichtig, dass die Verstärkungsfasern in der Kunststoff-Matrix beanspruchungsgerecht abgelegt und eingebracht sind.

Aus der DE 196 28 388 A1 ist es bei einem Bauteil in Form eines langgestreckten Faservorformlings, der beidendig mit einer Bohrung versehen ist, bekannt, die Verstärkungsfasern in Längserstreckung des Bauteils auszurichten und um die Bohrungen halbkreisförmig zu verlegen. Zur Verstärkung in Richtung der Bohrungsachse werden in dieser Richtung weitere Verstärkungsfasern eingebracht, und zwar je mehr desto geringer die Entfernung zur Bohrung ist. Eine gesonderte Verstärkung in radialer Richtung um die Bohrung ist nicht vorgesehen. Entsprechendes gilt auch für die EP 0 567 845 A1 und die US 5 518 564 A.

Die EP 1 308 265 B1 beschreibt ein Bauteil aus einem Faser-Kunststoff-Verbund in langgestreckter, abgekröpfter Bauweise aus einzelnen geschichteten Platten, wobei dieses Bauteil an einem Ende mit einer Bohrung versehen ist. Zur Anpassung der Anordnung der Verstärkungsfasern an den im Einsatz des Bauteils sich einstellenden Kraftflusses werden einerseits Verstärkungsfasern in paralleler halbkreisförmiger Anordnung um die Bohrung gelegt und andererseits mit einzelnen radial verlaufenden Verstärkungsfasern verstickt. Dies führt zwar zu einer kraftflussgerechten Verstärkungsfaserorientierung auch in radialer Richtung, jedoch erscheint diese radiale Anordnung von einzelnen Verstärkungsfasernabschnitten relativ aufwändig in der Vorbereitung bzw. Herstellung.

Aus der EP 1 511 949 B1 ist ein tribologisches nach der TFP-Technologie hergestelltes Bauteil in Form beispielsweise einer Brems- oder Kupplungsscheibe bekannt, bei der einzelne Verstärkungsfaserabschnitte in radialer, tangentialer und evolventenartiger Richtung bzw. Anordnung vorgesehen sind, um eine belastungsgerechte Verstärkungsfaserorientierung zu erreichen. Auch diese Anordnung erscheint relativ aufwändig.

Aufgabe der vorliegenden Erfindung ist es deshalb, ein Verfahren zum Herstellen einer Lochverstärkung bei einem Bauteil aus Faser-Kunststoff-Verbund und ein Bauteil aus einem Faser-Kunststoff-Verbund der eingangs genannten Art zu schaffen, bei dem das beanspruchungsgerechte bzw. belastungsgerecht faserorientierte Ablegen der Verstärkungsfasern in gezielterer sowie in einfacherer und schnellerer Weise folgen kann.

Zur Lösung dieser Aufgabe sind bei einem Verfahren zum Herstellen einer Lochverstärkung bei einem Bauteil aus Faser-Kunststoff-Verbund und einem Bauteil aus einem Faser-Kunststoff-Verbund der genannten Art die im Anspruch 1 bzw. die im Anspruch 11 angegebenen Merkmale vorgesehen.

Durch die erfindungsgemäßen Maßnahmen ist ein gezieltes sowie vereinfachtes beanspruchungsgerechtes Ablegen der Verstärkungsfasern auf bzw. in der Kunststoff-Matrix erreicht. Gleichzeitig ist an jedem gewünschten Ort um die Ausnehmung bzw. Bohrung eine belastungsgerechte Orientierung der Verstärkungsfasern gegeben und aufgrund der endlosen Verlegung und schlaufenartigen Auslegung der Verstärkungsfasern eine herstellungstechnische Vereinfachung erreicht.

Entsprechend den Merkmalen des Anspruchs 2 oder 3 und/oder 4 bzw. 12 oder 13 und/oder 14 ist eine beanspruchungsgerechte Verlegung der Verstärkungsfasern entsprechend der Ausdehnung bzw. den Bereichen der Beanspruchung um die Ausnehmung bzw. Bohrung erreicht. Beispielsweise kann die beanspruchungsgerechte Verstärkung der Ausnehmung bzw. Bohrung im Bereich von 45° oder 180° oder von umfänglich 360° erfolgen.

Vorteilhafte Ausgestaltungen bei der Anordnung und Verlegung der Verstärkungsfasern ergeben sich aus den Merkmalen eines oder mehrerer der Ansprüche 5 bis 7 bzw. 15 bis 17.

Mit den Merkmalen nach Anspruch 8 bzw. 18 ist eine beanspruchungsgerechte Verlegung der Verstärkungsfasern auch in Richtung der Bohrungsachse erreicht.

Eine weitere vorteilhafte Ausgestaltung im äußeren Bereich der Schlaufen der Verstärkungsfasern ergibt sich aus den Merkmalen nach Anspruch 9 bzw. 19.

Gemäß den Merkmalen des Anspruchs 10 bzw. 20 werden die Verstärkungsfasern auf ein Trägermaterial gebracht, das dann auf bzw. in die Kunststoff-Matrix abgelegt und eingebracht wird.

Gemäß den Merkmalen des Anspruchs 21 sind die Verstärkungsfasern beispielsweise als Bündel von mehreren Einzelfasern angeordnet, wobei diese beispielsweise parallel oder in verdrillter Anordnung vorgesehen sind.

Zur Herstellung bestimmter Bauteildicken sind die Merkmale gemäß Anspruch 12 vorgesehen.

Weitere Einzelheiten der Erfindung sind der folgenden Beschreibung zu entnehmen, in der die Erfindung anhand der in der Zeichnung dargestellten Ausführungsbeispiele näher beschrieben und erläutert sind. Es zeigen:
- Figur 1: in schematischer abgebrochener und aufgebrochener Draufsicht ein Bauteil aus einem Faser-Kunststoff-Verbund im Bereich einer von Verstärkungsfasern umgebenden Bohrung gemäß einem ersten Ausführungsbeispiel vorliegender Erfindung,
- Figur 2: in Draufsicht die auf ein Trägermaterial fixiert ausgeführte Anordnung von Verstärkungsfasern um die Bauteilbohrung nach dem Ausführungsbeispiel der Figur 1,
- Figur 3: eine der Figur 1 entsprechende Darstellung, jedoch gemäß einem zweiten Ausführungsbeispiel vorliegender Erfindung und
- Figur 4: eine der Figur 1 entsprechende Darstellung, jedoch gemäß einem dritten Ausführungsbeispiel vorliegender Erfindung.

Ein in der Zeichnung dargestelltes Bauteil 10, 10' bzw. 10" aus einem Faser-Kunststoff-Verbund ist mit einer Bohrung 11 versehen, die entsprechend ihrer im Betrieb ausgesetzten Belastung mit einer Verstärkung, hier auch als "Lochverstärkung" bezeichnet, mittels einer Anordnung 12 aus vorzugsweise mehreren Verstärkungsfasern, vorzugsweise Karbonfasern 13 versehen ist. Das Bauteil 10 ist beispielsweise das Rotorauge eines Rotorblattes einer Windkraftanlage, dessen als Bohrung bezeichnete Ausnehmung 11 auf eine Welle drehschlüssig gebracht ist, so dass die Bohrung 11 insbesondere in radialer Richtung erheblichen Beanspruchungen ausgesetzt ist. Es versteht sich, dass das Bauteil auch weiteren ähnlichen Anwendungen zugänglich ist, wie etwa bei Schienenfahrzeugen, Flugzeugen, Schiffen und dergleichen.

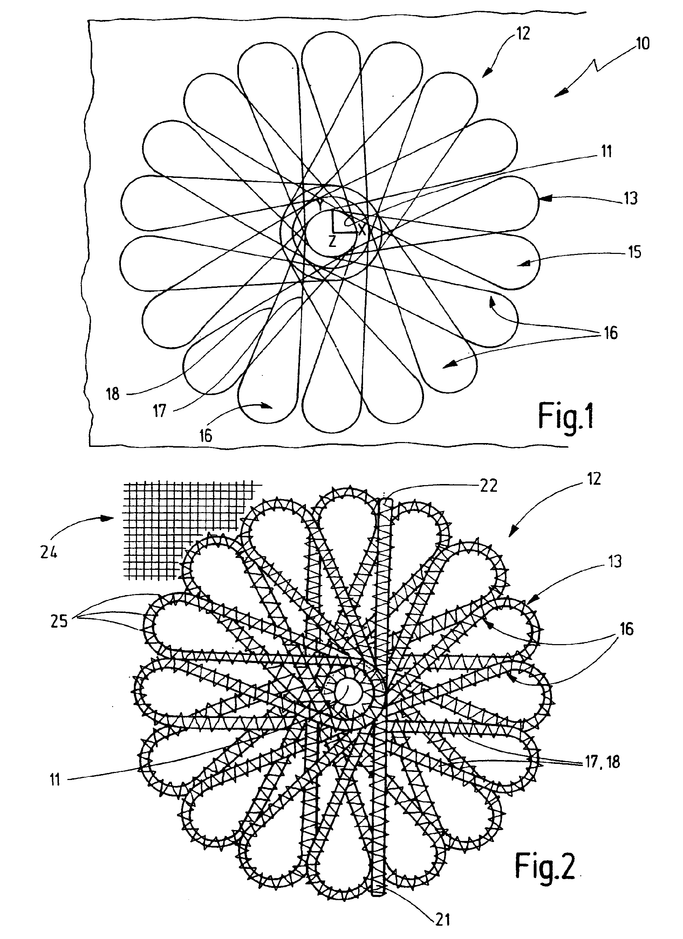

Die Lochverstärkung der Bohrung 11 erfolgt in der Weise, dass die Verstärkungsfaser bzw. -fasern 13 in endloser schlaufenartiger Anordnung 12 sowohl radial als auch teilumfangsseitig zur bzw. an die Bohrung 11 gelegt sind. Die Anordnung 12 der endlos verlegten Verstärkungsfaser(n) 13 besteht aus einer Vielzahl nach Figur 1 über 360° um die Bohrung 11 angeordneter Schlaufen 15, die endlos ineinander übergehen. Die Schlaufen 15 sind mit ihren im Wesentlichen etwa gleich breiten und halbkreisförmigen äußeren schlaufenförmigen Bereichen 16 von der Bohrung 11 radial beabstandet und befinden sich über diesen Umfang von 360° in unmittelbarer Nachbarschaft nebeneinander. Dabei sind die äußeren schlaufenförmigen Bereiche 16 benachbarter Schlaufen 15 entweder unmittelbar aneinanderliegend oder sich teilweise über einen Längenabschnitt überdeckend angeordnet oder zur Bohrung 11 hin sich überkreuzend gelegt. Die von den äußeren schlaufenförmigen Bereichen 16 ausgehenden und etwa radialartig nach innen zur Bohrung 11 gerichteten inneren Bereiche 17 und 18 verlaufen für jede Schlaufe 15 keilartig aufeinander zu und tangential an den betreffenden Umfang der Bohrung 11 heran, wo sie sich überdeckend angeordnet sind. Mit anderen Worten, die beiden von jedem äußeren schlaufenförmigen Bereich 16 jeder Schlaufe 15 ausgehenden inneren Bereiche 17 und 18 sind um jeweils denselben Umfangsabschnitt der Bohrung 11 gelegt bzw. gebracht. Während der eine innere Bereich 17 von einem inneren Bereich einer anderen Schlaufe 15 soz. kommt, geht soz. der andere innere Bereich 18 über in einen inneren Bereich, der Teil einer weiteren nicht unmittelbar benachbarten Schlaufe 15 bildet. Im Bereich der Bohrung 11 bzw. um deren Umfangsrand überkreuzen sich die inneren Bereiche 17 und 18 jeder Schlaufe 15 und sind damit in axialer Richtung der Bohrung 11 übereinander gelegt.

Auf diese Weise ergibt sich durch den tangentialen Verlauf der Verstärkungsfasern 13 an der Bohrung 11 und deren radialen Einfassung der Bohrung 11 eine Lochverstärkung sowohl in radialer Richtung sowie in tangentialer bzw. Umfangsrichtung und auch in axialer Richtung der Bohrung 11. Dies entspricht den belastungsbedingten Richtungen in der Bohrung 11, so dass die Faserorientierung mit den betriebsbedingten Beanspruchungen zusammenfällt.

Figur 2 zeigt eine Ausführung der schlaufenartigen Anordnung 12 durch die endlose Verstärkungsfaser 13. Beispielsweise beginnt die Verstärkungsfaser 13 am gemäß Figur 2 unteren Ende 21 und führt um einen Teilumfang der Bohrung 11 radial nach außen zur Bildung einer ersten Schlaufe 15, von der aus durch Rückführung die Verstärkungsfaser 13 nach innen und um einen weiteren Umfangsabschnitt der Bohrung 11 zur Bildung einer weiteren Schlaufe 15 geführt ist, usw., bis das in Figur 2 ersichtliche obere Ende 22 erreicht ist. Daraus ist ersichtlich, dass sowohl das im Wesentlichen radiale Ablegen also auch das umfangsseitig tangentiale Ablegen sowie das axiale Ablegen der Verstärkungsfaser 13 jeweils bzgl. der Bohrung 11 gleichmäßig erfolgt.

Beim Ausführungsbeispiel der Figur 2 besitzt die Verstärkungsfaser 13 die Form eines Faserbündels aus einer Vielzahl von Einzelfasern, die beispielsweise parallel zueinander angeordnet sind, die aber auch gegeneinander verdrillt sein können. Die gesamte Anordnung 12 der endlos verlegten Verstärkungsfaser bzw. Faserbündel 13 ist auf ein Trägermaterial 24, beispielsweise Gewebe oder Vlies aus Natur- oder Chemiefaser gelegt und mit Stichen 25 auf dem Trägermaterial 24 befestigt. Die Befestigung der Anordnung 12 über teilweise endlos gesetzte Stiche 25 erfolgt beispielsweise nach dem entsprechenden Auslegen über das TFP-Verfahren, so dass die Anordnung 12 insgesamt, das heißt nach teilweise Überdeckung und Kreuzung der Verstärkungsfaser 13 auf dem Trägermaterial 24 befestigt ist.

Das so mit der Lochverstärkung versehene Trägermaterial 24 wird alleine oder zusammen mit den zu verstärkenden Teilen eingeharzt. Je nach axialer bzw. Dickenabmessung des Bauteils 10 kann dieses aus mehreren plattenartigen Einzelschichten mit jeweils einer Anordnung 12 zur Lochverstärkung versehen sein.

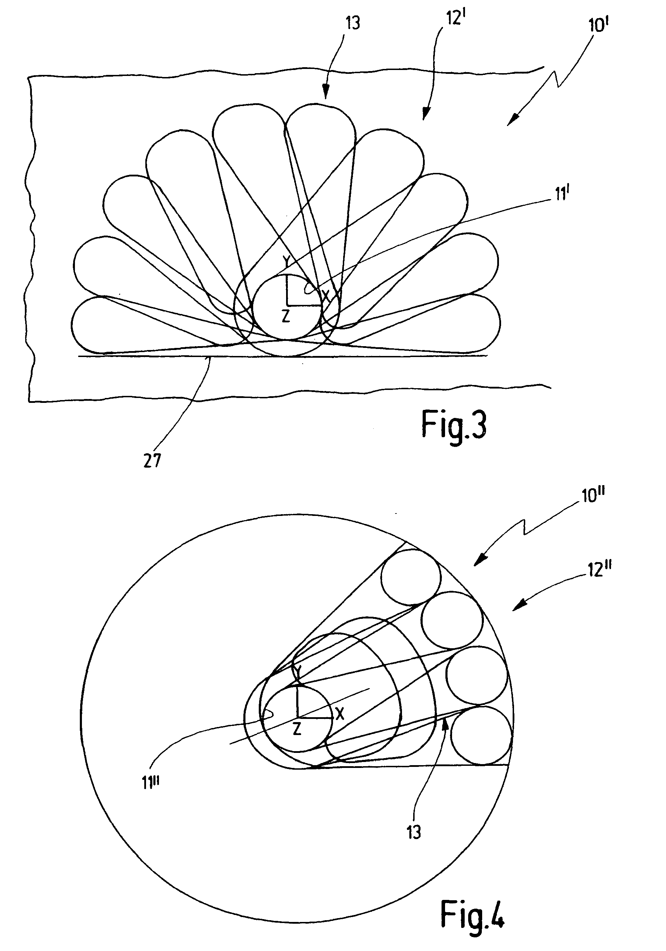

Die Figuren 3 und 4 zeigen Varianten der Ausgestaltung nach Figur 1. Das Bauteil 10' nach Figur 3 besitzt eine Anordnung 12' zur Lochverstärkung, die entsprechend der Bauteilbeanspruchung lediglich über 180° der Bauteilbohrung 11' verläuft. Das Bauteil 10' kann dabei seine Bohrung 11' beispielsweise ein Bereich eines Längsrandes 27 besitzen, wobei die Bohrung 11' bspw. der Befestigungsverbindung mit einem Nachbarbauteil dient.

Ist eine Bauteilbohrung 11" (Fig. 4) nur in einem ganz bestimmten eingeschränkten Segmentbereich belastet, beispielsweise bei der Verwendung als langgestreckter Stab zur Befestigung an einem breiteren Bauteil, dann befindet sich die Anordnung 12" zur Bohrungsverstärkung beispielsweise lediglich über einen Segmentbereich der Bohrung 11" von 45°.

In beiden Fällen ist die Anordnung 12' bzw. 12", wie die Anordnung 12 der Figur 1 bzw. 2, aus einer endlosen Verstärkungsfaser 13 aufgebaut, die über den betreffenden Segmentbereich schlaufenartig verlegt ist.

Es versteht sich, dass die Anordnung der endlos verlegten Verstärkungsfaser bzw. -fasern 13 über beliebige Segmentbereiche erfolgen kann. Die Ausgestaltung der Verstärkungsfaser 13 als Faserbündel kann ebenfalls in beliebiger Anordnung als Roving-Stränge, Faserbänder oder dergleichen erfolgen. Auch kann die Verstärkungsfaser 13 aus Glasfaser oder Aramidfaser gebildet sein.

Die endlose und schlaufenartige Verlegung der Verstärkungsfasern 13 tangential an und radial um die Bohrung 11 ist fertigungstechnisch von Vorteil. Es ist aber auch möglich die Schlaufenausgestaltung zu unterbrechen bzw. nur virtuell auszugestalten oder aber danach die Schlaufenausgestaltung zu entfernen.

## Patentansprüche

1. Verfahren zum Herstellen einer Lochverstärkung bei einem Bauteil (10) aus einem Faser-Kunststoff-Verbund, mit vorzugsweise quer zur Bauteiloberfläche verlaufenden Ausnehmungen (11) vorzugsweise in Form einer Kreiskontur zur Aufnahme von Befestigungselementen, Achsen, Wellen und dergleichen, wobei in einer Kunststoff-Matrix Verstärkungsfasern (13) bspw. in Form von Karbonfasern beanspruchungsgerecht abgelegt und eingebracht werden, wobei die Verstärkungsfasern (13) an der Ausnehmung (11) tangential und um die Ausnehmung (11) schlaufenartig verlegt werden, **dadurch gekennzeichnet, dass** die einzelnen Schlaufen (15) der Verstärkungsfasern (13) etwa radialartig zur Ausnehmung (11) verlaufen und endlos ineinander übergehen.

2. Verfahren nach Anspruch 1, **dadurch gekennzeichnet, dass** die Verstärkungsfasern (13) über einen Teilumfang der Ausnehmung (11) tangential verlegt werden.

3. Verfahren nach Anspruch 1, **dadurch gekennzeichnet, dass** die Verstärkungsfasern (13) über den gesamten Umfang der Ausnehmung (11) tangential verlegt werden.

4. Verfahren nach Anspruch 2 oder 3, **dadurch gekennzeichnet, dass** die Verstärkungsfasern (13') gleichmäßig verlegt werden.

5. Verfahren nach mindestens einem der Ansprüche 1 bis 4, **dadurch gekennzeichnet, dass** die beiden Endbereiche (17, 18) einer Schlaufe (15) am selben Umfangsbereich der Ausnehmung (11) vorbeigeführt werden.

6. Verfahren nach mindestens einem der Ansprüche 1 bis 5, **dadurch gekennzeichnet, dass** die einzelnen Schlaufen (15) im Verlaufe des endlosen Anordnens unmittelbar nebeneinander gelegt werden.

7. Verfahren nach mindestens einem der Ansprüche 1 bis 5, **dadurch gekennzeichnet, dass** die einzelnen Schlaufen (15) im Verlaufe des endlosen Anordnens in einem winkligen Abstand gelegt werden, der ein etwa ein- oder mehrfaches der Schlaufenbreite entspricht.

8. Verfahren nach mindestens einem der Ansprüche 1 bis 7, **dadurch gekennzeichnet, dass** die Schlaufenbereiche im Bereich der Ausnehmung (11) axial übereinandergelegt werden.

9. Verfahren nach mindestens einem der Ansprüche 1 bis 8, **dadurch gekennzeichnet, dass** die einzelnen Schlaufen (15) in ihrem breitesten Schlaufenbereich (16) sich überkreuzen oder sich zumindest teilweise überdeckend aneinander vorbeigeführt werden.

10. Verfahren nach mindestens einem der vorhergehenden Ansprüche, **dadurch gekennzeichnet, dass** die Verstärkungsfasern (13) auf einem Trägermaterial (24) gelegt aufgestickt bzw. aufgenäht werden.

11. Bauteil für eine Lochverstärkung eines Bauteils (10) aus einem Faser-Kunststoff-Verbund, mit vorzugsweise quer zur Bauteiloberfläche verlaufenden Ausnehmungen (11) vorzugsweise in Form einer Kreiskontur zur Aufnahme von Befestigungselementen, Achsen, Wellen und dergleichen, wobei in einer Kunststoff-Matrix Verstärkungsfasern (13) bspw. in Form von Karbonfasern beanspruchungsgerecht abgelegt und eingebracht sind, wobei eine tangentiale Anordnung (12) der Verstärkungsfasern (13) an der Ausnehmung (11) vorgesehen ist und die Verstärkungsfaser (13) um die Ausnehmung (11) schlaufenartig angeordnet sind, **dadurch gekennzeichnet, dass** die einzelnen Schlaufen (15) der Verstärkungsfasern (13) etwa radialartig zur Ausnehmung (11) angeordnet sind und endlos ineinander übergehen.

12. Bauteil nach Anspruch 11, **dadurch gekennzeichnet, dass** die tangentiale Anordnung (12) der Verstärkungsfasern (13) über einen Teilumfang der Ausnehmung (11) vorgesehen ist.

13. Bauteil nach Anspruch 11, **dadurch gekennzeichnet, dass** die tangentiale Anordnung (12) der Verstärkungsfasern (13) über den gesamten Umfang der Ausnehmung (11) vorgesehen ist.

14. Bauteil nach Anspruch 12 oder 13, **dadurch gekennzeichnet, dass** die tangentiale Anordnung (12) gleichmäßig ausgebildet ist.

15. Bauteil nach mindestens einem der Ansprüche 11 bis 14,
**dadurch gekennzeichnet, dass** die beiden Endbereiche (17, 18) einer Schlaufe (15) der schlaufenartigen Anordung (12) am selben Umfangsbereich der Ausnehmung (11) vorbeigeführt sind.

16. Bauteil nach mindestens einem der Ansprüche 11 bis 15,
**dadurch gekennzeichnet, dass** die einzelnen Schlaufen (15) im Verlaufe des endlosen Anordnens unmittelbar nebeneinander gelegt werden.

17. Bauteil nach mindestens einem der Ansprüche 11 bis 15,
**dadurch gekennzeichnet, dass** die einzelnen Schlaufen (15) im Verlaufe des endlosen Anordnens in einem winkligen Abstand gelegt werden, der ein etwa ein- oder mehrfaches der Schlaufenbreite entspricht.

18. Bauteil nach mindestens einem der Ansprüche 11 bis 17,
**dadurch gekennzeichnet, dass** die sich kreuzenden Schlaufenbereiche im Bereich der Ausnehmung (11) axial übereinandergelegt sind.

19. Bauteil nach mindestens einem der Ansprüche 11 bis 18,
**dadurch gekennzeichnet, dass** die einzelnen Schlaufen (15) in ihrem breitesten Schlaufenbereich (16) sich überkreuzen oder sich zumindest teilweise überdeckend aneinander vorbeigeführt sind.

20. Bauteil nach mindestens einem der Ansprüche 11 bis 19,
**dadurch gekennzeichnet, dass** die Verstärkungsfasern (13) auf einem Trägermaterial (24) gelegt aufgestickt bzw. aufgenäht sind.

21. Bauteil nach mindestens einem der Ansprüche 11 bis 20
**dadurch gekennzeichnet, dass** die Verstärkungsfaser (13) durch ein Bündel von mehreren Einzelfasern gebildet ist.

22. Bauteil nach mindestens einem der Ansprüche 11 bis 20,
**dadurch gekennzeichnet, dass** es aus mehreren die vollständige Anordnung (12) von Verstärkungsfasern (13) aufweisenden Kunststoff-Matrix-Schichten aufgebaut ist.

## Claims

1. Method for creating a hole reinforcement in a component (10) made of a fibre-plastic composite, with openings (11) preferably running transversely to the surface of the component, preferably in the form of a circular contour designed to receive fixing elements, axles, shafts and similar, wherein reinforcing fibres (13), for example in the form of carbon fibres, are laid and incorporated in a plastic matrix, in a stress-oriented pattern, said reinforcing fibres (13) being laid tangentially to the opening (11) and in a loop-like pattern around the opening (11), **characterised in that** the individual loops (15) of the reinforcing fibres (13) run roughly radially to the opening (11) and run endlessly into one another.

2. Method according to claim 1, **characterised in that** the reinforcing fibres (13) are laid tangentially over part of the circumference of the opening (11).

3. Method according to claim 1, **characterised in that** the reinforcing fibres (13) are laid tangentially around the entire circumference of the opening (11).

4. Method according to claim 2 or 3, **characterised in that** the reinforcing fibres (13') are laid evenly,

5. Method according to at least one of the claims 1 to 4, **characterised in that** the two end regions (17, 18) of a loop (15) are led past the same circumferential region of the opening (11).

6. Method according to at least one of the claims 1 to 5, **characterised in that**, during the course of the endless arrangement, the individual loops (15) are laid directly next to one another.

7. Method according to at least one of the claims 1 to 5, **characterised in that**, during the course of the endless arrangement, the individual loops (15) are laid at an angular distance which corresponds to around once or several times the width of the loops.

8. Method according to at least one of the claims 1 to 7, **characterised in that** the areas of the loops in the region of the opening (11) are overlaid axially.

9. Method according to at least one of the claims 1 to 8, **characterised in that**, in their widest area (16), the individual loops (15) intersect or are led past one another in an at least partially overlapping manner.

10. Method according to at least one of the preceding claims, **characterised in that** the reinforcing fibres (13), laid on a carrier material (24), are embroidered or stitched in place.

11. Component for a hole reinforcement of a component (10) made of a fibre-plastic composite, with openings (11) preferably running transversely to the surface of the component, preferably in the form of a circular contour designed to receive fixing elements, axles, shafts and similar, wherein reinforcing fibres (13), for example in the form of carbon fibres, are laid and incorporated in a plastic matrix, in a stress-oriented pattern, wherein the reinforcing fibres (13) are arranged tangentially to the opening (11) and the reinforcing fibres (13) are arranged in a loop-like pattern around the opening (11), **characterised in that** the individual loops (15) of the reinforcing fibres (13) are arranged roughly radially to the opening (11) and run endlessly into one another.

12. Component according to claim 11, **characterised in that** the tangential arrangement (12) of the reinforcing fibres (13) is provided over part of the circumference of the opening (11).

13. Component according to claim 11, **characterised in that** the tangential arrangement (12) of the reinforcing fibres (13) is provided over the entire circumference of the opening (11).

14. Component according to claim 12 or 13, **characterised in that** the tangential arrangement (12) is evenly distributed.

15. Component according to at least one of the claims 11 to 14, **characterised in that** the two end regions (17, 18) of a loop (15) of the loop-like arrangement (12) are led past the same circumferential region of the opening (11) .

16. Component according to at least one of the claims 11 to 15, **characterised in that**, during the course of the endless arrangement, the individual loops (15) are laid directly next to one another.

17. Component according to at least one of the claims 11 to 15, **characterised in that**, during the course of the endless arrangement, the individual loops (15) are laid at an angular distance which corresponds to around once or several times the width of the loops.

18. Component according to at least one of the claims 11 to 17, **characterised in that** the intersecting areas of the loops in the region of the opening (11) are overlaid axially.

19. Component according to at least one of the claims 11 to 18, **characterised in that**, in their widest area (16), the individual loops (15) intersect or are led past one another in an at least partially overlapping manner.

20. Component according to at least one of the claims 11 to 19, **characterised in that** the reinforcing fibres (13), laid on a carrier material (24), are embroidered or stitched in place.

21. Component according to at least one of the claims 11 to 20, **characterised in that** the reinforcing fibre (13) is formed by a bundle of several individual fibres.

22. Component according to at least one of the claims 11 to 20, **characterised in that** it is built up of several plastic matrix layers displaying the complete arrangement (12) of reinforcing fibres (13).

## Revendications

1. Procédé pour fabriquer un renforcement de trou dans le cas d'un élément de construction (10) à base d'un composite fibre-matière synthétique, comprenant des évidements (11) agencés de préférence transversalement à la surface de l'élément de préférence sous la forme d'un contour de cercle pour l'intégration d'éléments de fixation, d'axes, d'arbres, etc., des fibres de renfort (13) étant déposées et introduites dans une matrice de matière synthétique, par exemple sous la forme de fibres de carbone, de façon adaptée à la sollicitation, les fibres de renfort (13) étant posées de façon tangentielle sur l'évidement (11) et à la façon d'une boucle autour de l'évidement (11), **caractérisé en ce que** les boucles (15) individuelles des fibres de renfort (13) sont agencées à peu près de façon radiale par rapport à l'évidement (11) et se fondent les unes dans les autres de façon continue.

2. Procédé selon la revendication 1, **caractérisé en ce que** les fibres de renfort (13) sont posées de façon tangentielle sur un pourtour partiel de l'évidement (11).

3. Procédé selon la revendication 1, **caractérisé en ce que** les fibres de renfort (13) sont posées de façon tangentielle sur l'ensemble du pourtour de l'évidement (11).

4. Procédé selon la revendication 2 ou 3, **caractérisé en ce que** les fibres de renfort (13') sont posées de façon régulière.

5. Procédé selon au moins l'une des revendications 1 à 4, **caractérisé en ce que** les deux zones d'extrémité (17, 18) d'une boucle (15) sont guidées en passant devant la même zone périphérique de l'évidement (11).

6. Procédé selon au moins l'une des revendications 1 à 5, **caractérisé en ce que** les boucles (15) individuelles sont placées directement les unes à côté des autres au cours de l'agencement sans fin.

7. Procédé selon au moins l'une des revendications 1 à 5, **caractérisé en ce que** les boucles (15) individuelles sont posées au cours de l'agencement sans fin dans un espacement d'angle, qui correspond à peu près à une ou plusieurs fois la largeur de boucle.

8. Procédé selon au moins l'une des revendications 1 à 7, **caractérisé en ce que** les zones de boucle sont posées axialement les unes au-dessus des autres dans la zone de l'évidement (11).

9. Procédé selon au moins l'une des revendications 1 à 8, **caractérisé en ce que** les boucles (15) individuelles se recroisent dans leur zone de boucle (16) la plus large ou sont guidées en passant les unes devant les autres en se recouvrant au moins partiellement.

10. Procédé selon au moins l'une des revendications précédentes, **caractérisé en ce que** les fibres de renfort (13) sont brodées ou cousues posées sur un matériau support (24).

11. Composant pour un renfort de trou d'un élément de construction (10) à base d'un composite fibre-matière synthétique, comprenant des évidements (11) agencés de préférence transversalement à la surface de l'élément de construction de préférence sous la forme d'un contour de cercle pour le logement d'éléments de fixation, d'axes, d'arbres, etc., des fibres de renfort (13), par exemple sous la forme de fibres de carbone, étant déposées et introduites dans une matrice de matière synthétique de façon adaptée à la contrainte, un agencement (12) tangentiel des fibres de carbone (13) étant prévu sur l'évidement (11) et la fibre de renfort (13) étant disposées à la façon d'une boucle autour de l'évidement (11), **caractérisé en ce que** les boucles (15) individuelles des fibres de renfort (13) sont disposées à peu près de manière radiale par rapport à l'évidement (11) et se mélangent de façon continue les unes dans les autres.

12. Elément de construction selon la revendication 11, **caractérisé en ce que** l'agencement (12) tangentiel des fibres de renfort (13) est prévu sur un pourtour partiel de l'évidement (11).

13. Elément de construction selon la revendication 11, **caractérisé en ce que** l'agencement (12) tangentiel des fibres de renfort (13) est prévu sur l'ensemble du pourtour de l'évidement (11).

14. Elément de construction selon la revendication 12 ou 13, **caractérisé en ce que** l'agencement tangentiel (12) est conçu de façon régulière.

15. Elément de construction selon au moins l'une des revendications 11 à 14, **caractérisé en ce que** les deux zones d'extrémité (17, 18) d'une boucle (15) de l'agencement (12) en forme de boucle sont guidées en passant devant la même zone périphérique de l'évidement (11).

16. Elément de construction selon au moins l'une des revendications 11 à 15, **caractérisé en ce que** les boucles (15) individuelles sont placées directement les unes à côté des autres au cours de l'agencement continu.

17. Elément de construction selon au moins l'une des revendications 11 à 15, **caractérisé en ce que** les boucles (15) individuelles sont placées au cours de l'agencement continu à une distance angulaire, qui correspond à peu près à une ou plusieurs fois la largeur de boucle.

18. Elément de construction selon au moins l'une des revendications 11 à 17, **caractérisé en ce que** les zones de boucle qui se croisent sont placées axialement les unes au-dessus des autres dans la zone de l'évidement (11).

19. Elément de construction selon au moins l'une des revendications 11 à 18, **caractérisé en ce que** les boucles (15) individuelles se croisent dans leur zone de boucle (16) la plus large ou sont guidées en passant les unes devant les autres en se recouvrant au moins partiellement.

20. Elément de construction selon au moins l'une des revendications 11 à 19, **caractérisé en ce que** les fibres de renfort (13) sont brodées ou cousues posées sur un matériau support (24).

21. Elément de construction selon au moins l'une des revendications 11 à 20, **caractérisé en ce que** la fibre de renfort (13) est formée par un faisceau de plusieurs fibres individuelles.

22. Elément de construction selon au moins l'une des revendications 11 à 20, **caractérisé en ce qu'**il est conçu à base de plusieurs couches de matrice de matière synthétique présentant l'agencement complet (12) de fibres de renfort (13) .
